# FASCICULE DE BREVET EUROPEEN

(11) **EP 2 610 197 B1**
(45) Date de publication et mention de la délivrance du brevet: **02.03.2016**
(21) Numéro de dépôt: 12196721.0
(22) Date de dépôt: 12.12.2012
(51) Int. Cl.: B65G 57/24

(54) **Palettiseur, procédé de palettisation et transfert par le palettiseur d'une couche d'objets d'un convoyeur vers un outil de dépose**
Palettenlader, Verfahren der Palettierung und Transport mithilfe des Palettenladers einer Schicht von Gegenständen von einem Fließband zu einem Ablagegerät
Palletiser, method for palletisation and transfer by the palletiser of a layer of objects from a conveyor to a depositing tool

(30) Priorité: 22.12.2011 FR 1162306
(43) Date de publication de la demande: 03.07.2013
(73) Titulaire: Gebo Packaging Solutions Italy SRL, 43126 Parma (IT)
(72) Inventeur: Petrovic, Zmaj, 76930 OCTEVILLE-SUR-MER (FR)
(74) Mandataire: Eltzer, Thomas

(56) Documents cités:
- EP-A1- 0 007 119
- EP-A1- 2 112 097
- FR-A2- 2 554 094
- US-A- 2 875 908

## Description

### DOMAINE DE L'INVENTION :

L'invention concerne le domaine des palettiseurs et des procédés de palettisation pour déposer une couche préconformée d'objets sur une palette, notamment ceux utilisant un convoyeur et un outil de dépose.

L'invention concerne en particulier la phase de transfert de la couche préconformée d'objets depuis le convoyeur jusque sur l'outil de dépose.

### ETAT DE LA TECHNIQUE :

Les figures la à 1c de la présente demande illustrent un palettiseur selon le préambule de la revendication 1 et utilisant un procédé de palettisation selon le préambule de la revendication 10.

Le palettiseur des figures la à 1c comprend un convoyeur **1** équipé d'un tapis **2** d'entraînement motorisé et un outil **3** de dépose présentant une surface de rouleaux **4** libres en rotation et équipé d'un bras **5** de fin d'introduction. Les rouleaux 4 sont par exemple montés sur des paliers et ne sont pas reliés à un moteur d'entrainement. Des rouleaux **4a** sont des rouleaux 4 qui ne supportent pas d'objets et les rouleaux **4b** sont ceux sur lesquels roulent des objets **6b.** Lorsqu'aucun objet ne roule dessus, les rouleaux 4a sont à l'arrêt.

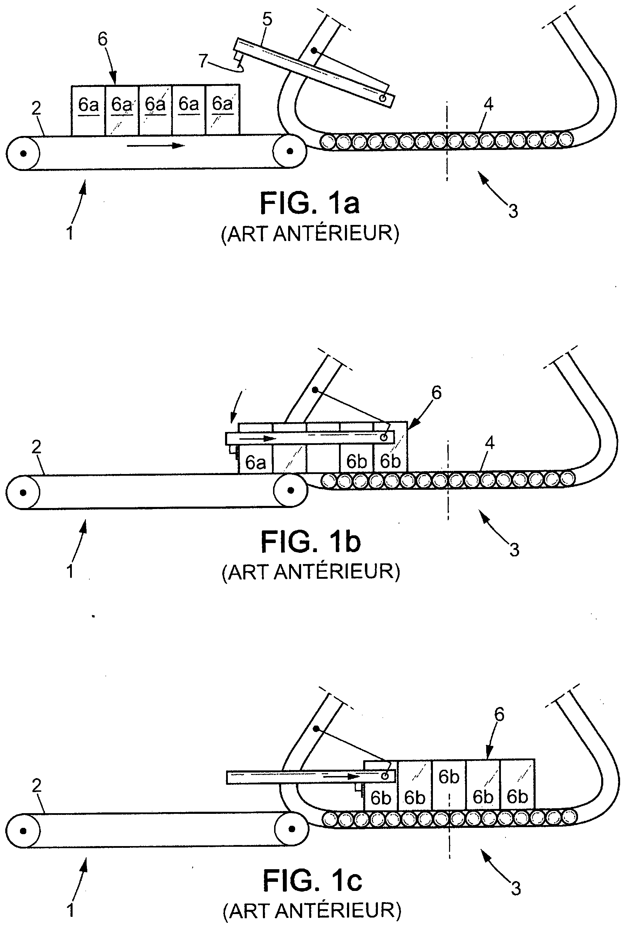

Dans une première phase d'entraînement, une couche **6** préconformée d'objets 6a est entraînée depuis une position initiale illustrée en figure 1a jusqu'à une position intermédiaire illustrée en figure 1b. Dans cette position intermédiaire, une partie 6b de la couche 6 préconformée d'objets a déjà commencé son introduction sur les rouleaux 4 libres et il ne reste plus qu'un ou que quelques objets **6a** sur le tapis 2 d'entraînement.

L'arrivée des objets 6b sur les rouleaux 4b s'accompagne de la mise en rotation des rouleaux indiqués 4b. La mise en rotation des rouleaux 4b suppose de vaincre l'inertie de ces rouleaux. Cela consomme une partie de l'énergie cinétique des objets 6b qui sont ainsi ralentis. De plus la rotation des rouleaux 4b s'accompagne de frottements dans leurs paliers qui ralentissent aussi les objets 6b. Les objets 6b ne sont plus entrainés comme ils l'étaient sur le tapis 2.

L'entraînement des objets 6a est dû au coefficient de frottement que présentent les objets sur le tapis 2. Dans la position intermédiaire, le, ou les quelques objets restants encore sur le tapis 2 engendrent un effort de poussée qui peut être insuffisant pour continuer à pousser tous les autres objets 6b déjà sur les rouleaux 4 libres.

La fin d'introduction de la couche 6 sur les rouleaux 4 libres utilise un moyen de poussage complémentaire, et illustré sous la forme du bras 5 équipé d'un poussoir 7. Dans l'art antérieur, le poussoir 7 prend en charge au moins la fin de l'introduction de la couche 6 préconformée d'objets pour que celle-ci finisse de quitter le tapis 2 du convoyeur 1.

Autrement dit, le moyen de transfert de la couche pré conformée d'objet depuis le tapis 2 de jusque sur l'outil 3 de dépose comprend non seulement la motorisation du tapis 2, mais également l'actionnement du bras 5.

Un tel procédé de transfert du convoyeur 1 vers l'outil 3 de dépose présente plusieurs inconvénients qui contribuent à un transfert lent et coûteux. En effet, entre les positions initiale 1a et finale 1c, la couche 6 d'objets est prise en charge par plusieurs moyens d'entraînement 2 et 5. Cela implique un coût élevé et impose une synchronisation de ces différents moyens. Cette synchronisation requiert des moyens de synchronisation et des temporisations. De plus, l'existence du bras 5 et du poussoir 7 peut ralentir les séquences du procédé de palettisation ayant lieu, soit avant, soit après le transfert.

La demande EP 2 112097 décrit également un palettiseur selon le préambule de la revendication 1. Dans ce palettiseur, des couches préconformées d'objets sont transférées depuis un convoyeur motorisé jusque sur une station de chargement. La station de chargement est équipée de rouleaux qui ne sont pas libres en rotation car ils sont entrainés par un moteur. Le palettiseur comprend également un bras de sécurisation analogue au bras 5 de l'art antérieur précédemment décrit.

Grâce à la motorisation des rouleaux de la station de chargement, les objets arrivant sur ces rouleaux ne sont pas ralentis et ne s'opposent pas à l'arrivée sur la station de chargement des objets qui sont encore sur le convoyeur. Autrement dit, le moyen de transfert de la totalité de la couche préconformée d'objets depuis le convoyeur jusque sur la station de chargement comprend non seulement la motorisation du convoyeur mais également la motorisation des rouleaux de la station de chargement et comprend aussi l'actionnement du bras de sécurisation.

La demande EP 0 007 119 décrit un appareil d'empilement d'objets. Dans ce document, des objets sont poussés progressivement sur une table pour former des rangées. Puis les différentes rangées sont poussées les unes contre les autres sur une fourche pour constituer une couche d'objets devant être palettisée. La couche est formée directement sur la fourche de dépose. Il n'y a pas de transfert d'une couche préconformée d'objets depuis un convoyeur jusque sur un outil de dépose. Cela présente l'inconvénient que l'outil de dépose, ici la fourche, est immobilisé pendant tout le temps de conformation de la couche à palettiser. Par ailleurs, l'appareil décrit dans ce même document comprend une piste de rouleaux d'arrivée qui peut présenter des rouleaux entrainés par un moteur suivi de rouleaux pouvant être libres en rotation. Cependant, le transfert d'un objet donné depuis les rouleaux entrainés vers les rouleaux libres n'est réalisé en totalité que parce que les objets qui suivent cet objet, et sont entrainés par les rouleaux motorisés, poussent cet objet hors des rouleaux motorisés. Le document ne présente pas de solution pour finir le transfert d'une couche d'objets hors des rouleaux motorisés.

La demande FR 2 554 094 décrit le transfert d'un paquet depuis des rouleaux amont vers des rouleaux aval. Le transfert du paquet a lieu en totalité alors que les rouleaux amont et les rouleaux aval sont tous les deux entrainés en rotation par une courroie d'entrainement.

### OBJET ET RESUME DE L'INVENTION :

L'invention propose un palettiseur selon la revendication 1 et un procédé de palettisation selon la revendication 12 pour déposer une couche préconformée d'objets sur une palette qui remédient à au moins l'un des inconvénients précités.

Un but de l'invention est de proposer un procédé de palettisation plus rapide et/ou un palettiseur moins cher.

Selon un mode de réalisation, le palettiseur pour déposer une couche préconformée d'objets sur une palette, comprend :
- un convoyeur, équipé d'un moyen d'entraînement de la couche préconformée d'objets, et conçu pour communiquer une énergie cinétique à ladite couche préconformée d'objets,
- un outil de dépose, conçu pour déposer la couche préconformée d'objets sur la palette, et
- un moyen de transfert de la couche préconformée d'objets depuis le convoyeur jusque sur l'outil de dépose.

Le moyen de transfert comprend ledit moyen d'entraînement et un moyen de fin d'introduction conçu pour que la totalité de ladite couche préconformée d'objets quitte le convoyeur et arrive sur l'outil de dépose. Le convoyeur est un lanceur de couches préconformées d'objets. Le moyen de fin d'introduction est constitué exclusivement par l'énergie cinétique communiquée par le convoyeur-lanceur.

On comprend que, dans le cas où le moyen d'entraînement du convoyeur serait dans l'incapacité d'exercer un effort de poussée sur la couche, suffisant pour forcer cette dernière à quitter le convoyeur en totalité, l'énergie cinétique communiquée à cette couche peut toutefois permettre à ladite couche d'objets de poursuivre son mouvement au-delà de la position où le seul effort de poussée serait insuffisant.

Ainsi, l'énergie cinétique, ou la quantité de mouvements, emmagasinée par la couche préconformée d'objets lors du lancement par le convoyeur constitue bien un moyen d'introduction permettant de finir l'introduction en totalité de la couche préconformée d'objets sur l'outil de dépose. Un tel moyen d'introduction présente l'avantage de prendre automatiquement le relais du moyen d'entraînement par le convoyeur sans qu'il y ait à mettre en place une synchronisation lente et coûteuse. Autrement dit, en étant constitué uniquement par l'entraînement positif du convoyeur et par l'énergie cinétique emmagasinée, le moyen de transfert de la totalité de la couche préconformée d'objets jusque sur l'outil de dépose est particulièrement rapide et bon marché.

Avantageusement, l'outil de dépose est équipé d'un tapis de réception, constitué d'une pluralité de rouleaux mobiles en rotation. En particulier, les rouleaux du tapis de réception sont libres en rotation et ne sont pas motorisés. Le tapis présente une surface cible sur laquelle une couche préconformée d'objets est prête à être déposée sur la palette, et un premier rouleau qui est destiné à être sensiblement adjacent au convoyeur.

Selon un mode de réalisation, le palettiseur comprend un moyen d'amenée jusque sur la surface cible. Le moyen d'amenée est constitué exclusivement par l'énergie cinétique communiquée par le convoyeur-lanceur. Cela permet de réduire le nombre de mécanismes devant être montés sur l'outil de dépose. Cela permet d'alléger l'outil de dépose. Cela permet d'accélérer les phases du procédé de palettisation qui mettent en oeuvre un mouvement de l'outil de dépose. Cela permet de réduire la consommation d'énergie du palettiseur.

Selon un mode de réalisation, le palettiseur comprend un moyen d'arrêt de la couche préconformée d'objets sur la surface cible.

Selon une variante, ledit moyen d'arrêt est constitué par une butée, immobile pendant le transfert de la couche préconformée d'objets. Ladite butée est disposée au voisinage de l'extrémité de la surface cible la plus éloignée du convoyeur-lanceur. Cette variante convient en particulier pour les objets présentant une décélération naturelle sur des rouleaux libres assez forte. Tel est le cas des packs filmés de bouteilles pétaloïdes.

Selon une variante, le palettiseur comprend un moyen de freinage rapide de la couche préconformée d'objets, lequel moyen comprend une butée, montée sur un amortisseur et mobile au moins entre une position de début de freinage rapide et une position au voisinage de l'extrémité de la surface cible la plus éloignée du convoyeur-lanceur. Cette variante convient en particulier pour les objets glissant facilement sur la surface de rouleaux libres. Tel est le cas des packs à fonds cartonnés plats. Cette variante peut être également très utile pour des objets à palettiser fragiles (bouteilles en verre) ou instables (bouteilles hautes).

Avantageusement, les rouleaux de l'outil de dépose ne sont pas raccordés à un moyen d'entraînement positif et/ou ne sont mis en rotation que par la friction des objets en cours de transfert. Selon l'invention, l'outil de dépose est dépourvu de moyen d'entraînement de la couche préconformée d'objets dans le sens de transfert. Cela permet d'alléger l'outil de dépose, de réduire le temps de cycle de palettisation et l'énergie consommée, ainsi que précédemment expliqué.

Avantageusement, le palettiseur présente une configuration de transfert dans laquelle le tapis de réception est coplanaire à un plan de convoyage du convoyeur-lanceur.

Avantageusement, le moyen d'entraînement du convoyeur est équipé d'un support d'entraînement, et d'un moteur de mise en mouvement du support d'entraînement. Le support d'entraînement est conçu pour communiquer l'énergie cinétique à ladite couche d'objets par frottement des objets sur le support d'entraînement sous l'effet du poids des objets.

Avantageusement, le matériau du support d'entraînement est adapté au type de fond des objets à palettiser. Cela permet de déterminer l'accélération maximum qui peut être imprimée à la couche préconformée d'objets. Cette accélération maximum peut être prise en compte dans une détermination automatique du profil de vitesse à imprimer à la couche d'objets par le convoyeur.

Par ailleurs, le convoyeur peut comprendre un plan de glissement et un poussoir conçu pour pousser directement la couche préconformée d'objets vers l'outil de dépose. Cependant, ledit poussoir ne pénètre pas dans l'outil de dépose et/ou ne s'étend pas au-dessus de ladite pluralité de rouleaux.

Selon un autre aspect, l'invention porte sur un procédé de palettisation d'une couche préconformée d'objets sur une palette, utilisant un convoyeur et un outil de dépose. Le procédé comprend une étape de transfert au cours de laquelle la couche préconformée d'objets est entraînée, selon une direction de transfert, depuis le convoyeur jusque sur l'outil de dépose. L'étape de transfert comprend une phase de fin d'introduction au cours de laquelle la totalité de ladite couche préconformée d'objets quitte le convoyeur et arrive sur l'outil de dépose. L'étape de transfert comprend une phase de lancement de la couche préconformée d'objets au cours de laquelle le convoyeur communique à ladite couche préconformée d'objets une énergie cinétique. L'entraînement dans la direction du transfert de ladite couche préconformée d'objets au cours de la phase de fin d'introduction est uniquement dû à l'énergie cinétique acquise durant la phase de lancement.

Comme expliqué pour le palettiseur, on comprend qu'une telle étape de transfert est rapide car la phase de fin d'introduction débute automatiquement à la fin de la phase de lancement sans nécessiter de moyens de synchronisation.

Avantageusement, l'outil de dépose utilisé présente une surface cible sur laquelle la couche préconformée d'objets est prête à être déposée sur la palette, l'énergie cinétique, communiquée lors de l'étape de lancement étant suffisante pour que la totalité de la couche préconformée d'objets arrive jusqu'à la surface cible.

Avantageusement, l'énergie cinétique communiquée par le convoyeur à ladite couche préconformée d'objets est supérieure ou égale à l'énergie consommée lors du déplacement de la couche préconformée d'objet sur l'outil de dépose.

Avantageusement, lorsque l'outil de dépose utilisé comprend une pluralité de rouleaux mobiles en rotation, l'énergie cinétique communiquée à la couche par le convoyeur est supérieure à l'énergie cinétique communiquée aux rouleaux par la couche.

Pour une couche donnée d'objets, une inertie donnée des rouleaux et pour des conditions données de coopération entre le fond des objets et la surface de rouleaux, on peut déterminer la décélération naturelle de la couche préconformée d'objets sur les rouleaux, ainsi que l'énergie cinétique devant être communiquée durant la phase de lancement. Cela permet de déterminer les paramètres de commande du convoyeur-lanceur. Autrement dit, le palettiseur correspondant comprend un moyen de détermination de l'énergie cinétique devant être communiquée par le convoyeur-lanceur à la couche préconformée d'objets pour que la totalité de la couche préconformée d'objets quitte le convoyeur et arrive sur l'outil de dépose.

Selon un mode de réalisation, le procédé comprend une phase de décélération rapide des objets sur l'outil, au cours de laquelle on décélère les objets avec une intensité de décélération plus forte qu'un seuil, dit de décélération naturelle.

### BREVE DESCRIPTION DES DESSINS :

Les figures 1a, 1b, 1c illustrent respectivement une configuration initiale, une configuration intermédiaire et une configuration finale d'une étape de transfert selon un art antérieur de palettiseur ;
   La présente invention sera mieux comprise à l'étude de la description détaillée de quelques modes de réalisation pris à titre d'exemples nullement limitatifs et illustrés par les dessins annexés sur lesquels :

- la figure 2 illustre un mode de réalisation de l'invention ;
- la figure 3 illustre une première cause de ralentissement naturel d'une couche d'objets le long d'une surface de rouleaux libres ;
- la figure 4 illustre une deuxième cause de ralentissement naturel d'une couche préconformée d'objets le long d'une surface de rouleaux libres ;
- les figures 5a et 5b illustrent le problème posé par la fin d'introduction de la couche préconformée d'objets sur la surface de rouleaux ;
- les figures 6a à 6g illustrent différentes étapes de transfert, et un diagramme de vitesses selon un autre mode de réalisation ;
- les figures 7a à 7g illustrent différentes étapes de transfert, et un diagramme de vitesses selon un autre mode de réalisation ;
- les figures 8a à 8d illustrent différentes étapes de transfert, et un diagramme de vitesses selon le mode de réalisation de la figure 2;

### DESCRIPTION DETAILLEE :

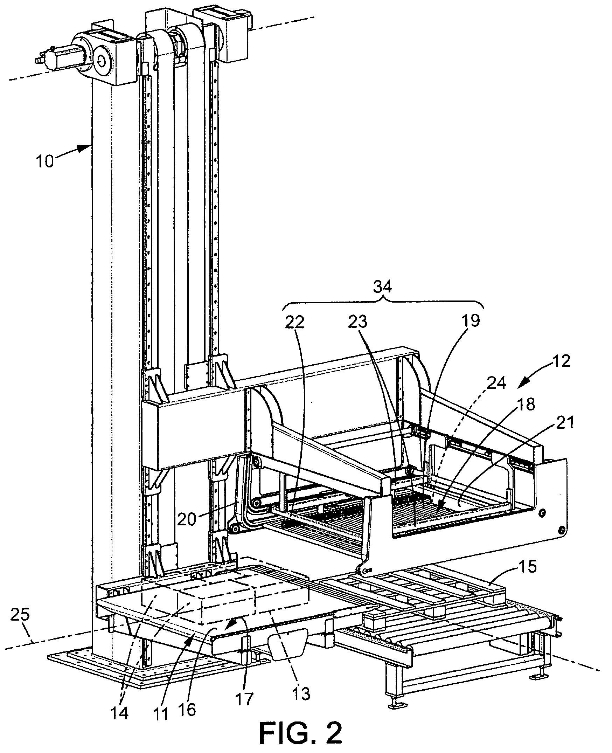

Comme illustré en figure 2, le palettiseur comprend une colonne **10** fixée sur le sol sur lequel coulisse verticalement d'une part un convoyeur **11** et d'autre part un outil **12** de dépose. A été représenté en traits mixtes sur le convoyeur 11 une couche **13** d'objets **14** qui ont été préalablement assemblés pour former la couche 13 par un dispositif de préparation de couches qui n'est pas illustré sur les figures. Les objets 14 sont par exemple des packs de six bouteilles ou d'un nombre quelconque de canettes ou de récipients en carton parallélépipédiques. Le pack est maintenu dans sa cohésion par un film thermorétractable qui lui confère une forme extérieure sensiblement parallélépipédique. Le dispositif de préparation de la couche 13 oriente les objets 14 de manière à ce que la couche 13 soit compacte et couvre sensiblement toute la surface d'une palette 15. L'outil 12 de dépose est disposé au-dessus de la palette 15 et monte au fur et à mesure que les différentes couches 13 sont empilées sur la palette 15. Le convoyeur 11 a principalement pour objet de faire la navette verticale entre le dispositif de préparation de couches et l'outil 12 de dépose.

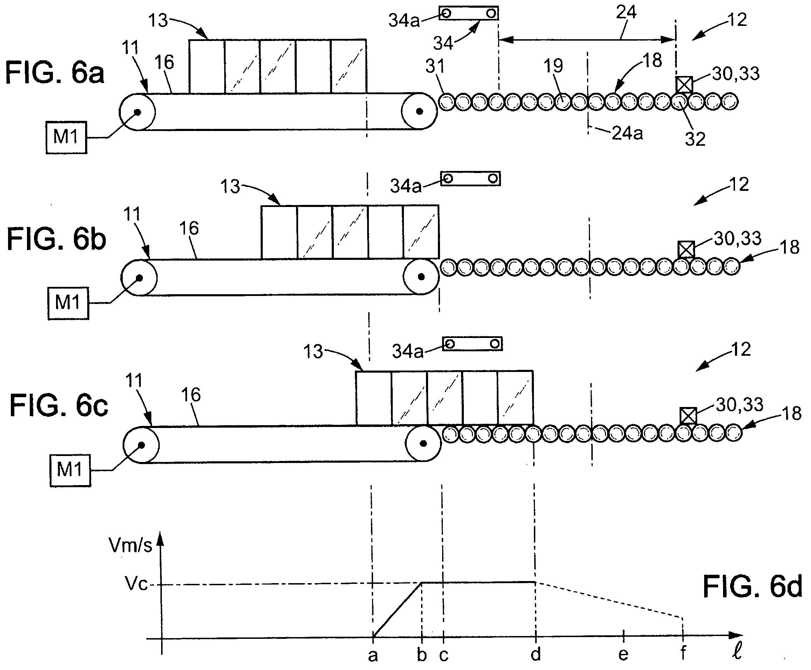

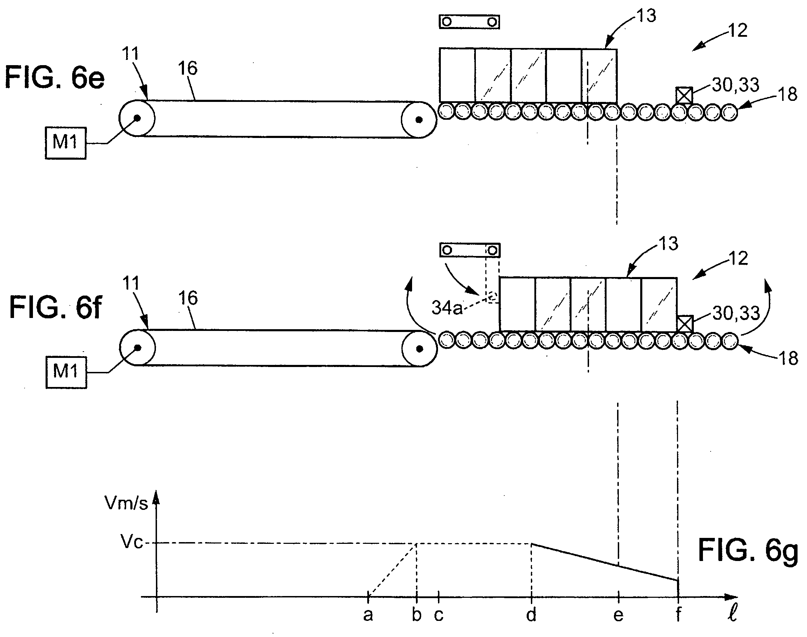

Le convoyeur 11 comprend un support 16 d'entraînement ayant la forme d'une bande de convoyage entraînée par un moteur **M1** illustré aux figures 6 à 8. Le support 16 d'entraînement est mobile le long d'un plan **17** de convoyage et selon une direction **25** de transfert. L'outil 12 de dépose est équipé d'un tapis **18** de réception constitué d'une pluralité de rouleaux **19,** libres en rotation et solidarisés les uns aux autres par deux chaînes d'extrémité qui glissent dans des glissières **20** de manière à ouvrir le tapis 18 de réception par le milieu afin que la couche 13 préconformée d'objets soit déposée au-dessus de la palette 15.

Le palettiseur 1 comprend une configuration de transfert, qui n'est pas celle illustrée sur la figure 2, et au cours de laquelle le plan **17** de convoyage du convoyeur 11 est amené dans l'alignement du tapis 18 de réception de l'outil 12 de dépose.

L'outil 12 de dépose comprend en outre un moyen **34** de maintien comprenant une butée **21** aval et une barre **22** de maintien amont dont le fonctionnement sera détaillé ultérieurement. Le moyen 34 de maintien comprend en outre des barres **23** de maintien latéral. Lorsque la couche 13 préconformée d'objets est prête à être déposée sur la palette 15, la butée 21 aval, et les barres 22 et 23 de maintien délimitent une surface **24** cible située dans l'alignement de la pile des couches 13 préconformées d'objets déjà déposés sur la palette 15. Ainsi, lors du retrait des rouleaux 19 le long des glissières 20, la couche 13 préconformée d'objets reste maintenue grâce à la butée 21 aval et aux barres 22, 23 de maintien de sorte que ladite couche 13 soit déposée exactement au-dessus de la précédente.

Les rouleaux 19 du tapis 18 de réception sont chacun libres en rotation et sensiblement coplanaires. Chacun des rouleaux 19 est sensiblement adjacent au rouleau 19 voisin. Chacun des rouleaux 19 s'étend sur toute la largeur du tapis 18 de réception selon une direction perpendiculaire à la direction 25 de transfert, c'est-à-dire sur une longueur supérieure à la surface 24 cible, c'est-à-dire supérieure à 1,3 mètres par exemple. Par ailleurs, les rouleaux 19 sont de diamètre relativement réduit, par exemple de 30 à 40 mm, notamment environ 35 mm de diamètre. Ainsi, le tapis 18 de réception est constitué de rouleaux 19 à la fois longs et de petit diamètre.

Le déplacement de la couche 13 préconformée d'objets dans le sens de la direction 25 de transfert, entre le convoyeur 11 et jusque sur la surface 24 cible, est uniquement dû à l'énergie cinétique communiquée à la couche 13 préconformée d'objets par le convoyeur 11. Autrement dit, le convoyeur 11 est un convoyeur-lanceur qui lance suffisamment rapidement la couche 13 préconformée d'objets pour que celle-ci atteigne la surface 24 cible de l'outil 12 de dépose sans nécessiter de moyens d'entraînement positifs des rouleaux 19, lesquels rouleaux ne sont entraînés en rotation que par la friction des objets 14 de la couche 13 préconformée d'objets qui arrivent à grande vitesse sur le tapis 18 de réception.

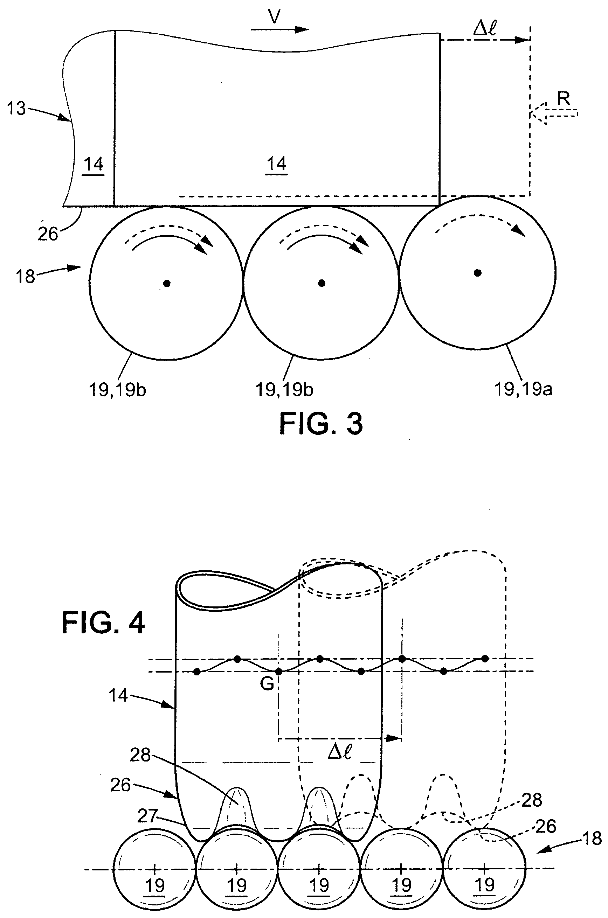

On va, à l'aide des figures 3 et 4, décrire quelques causes de résistance au glissement de la couche 13 préconformée d'objets le long du tapis 18 de réception. Comme illustré en figure 3, les rouleaux 19 de l'outil 12 de dépose fléchissent sous le poids de la couche 13 préconformée d'objets. Ainsi, un rouleau 19a qui n'a pas encore été rejoint par la couche 13 préconformée d'objets peut être légèrement au-dessus des rouleaux 19b qui supportent déjà ladite couche 13. Une différence de hauteur entre les rouleaux 19a et 19b peut aussi provenir des tolérances mécaniques des rouleaux 19.

Lorsque la couche 13 préconformée d'objets glisse avec une certaine vitesse "V" le long du tapis 18 de réception, un fond 26 des objets 14 entraîne par friction les rouleaux 19b sur lesquels ils reposent. Les rouleaux 19b sont ainsi entraînés en rotation. Cela est illustré par les flèches en traits pleins sur la figure 3. L'énergie consommée lors de l'avancée de la couche 13 préconformée d'objets d'une distance Δℓ, de la position illustrée en traits pleins à celle illustrée en pointillés, correspond à la somme de l'énergie nécessaire pour soulever la couche 13 préconformée d'objets au-dessus du rouleau 19a et/ou pour fléchir ce rouleau 19a, de l'énergie nécessaire pour entraîner en rotation le rouleau 19a à la même vitesse que les autres rouleaux 19b, de l'énergie nécessaire pour vaincre les éventuels frottements dus à la rotation des rouleaux 19a et 19b. Toutes ces énergies se dissipent et/ou sont emmagasinées dans le tapis 18 de réception.

La figure 4 illustre une autre cause de consommation d'énergie qui se dissipe dans la couche 13 préconformée d'objets, du fait que celle-ci n'est pas infiniment rigide et/ou élastique. Prenons l'exemple où les objets 14 de ladite couche 13 sont des packs de six bouteilles retenues par un film thermorétractable, chacune des bouteilles ayant un fond 26 de type pétaloïde, c'est-à-dire présentant des excroissances 27 qui font saillie hors d'une paroi 28 arrondie. Ce type de bouteille se rencontre couramment pour les eaux minérales gazeuses. Il est courant que les packs de bouteilles pétaloïdes reposent directement sur les excroissances 27 des bouteilles. La position angulaire des excroissances d'une bouteille à l'autre d'un même pack 14 reste généralement aléatoire.

Si une bouteille était seule à se déplacer horizontalement le long du tapis 18 de réception, son centre G de gravité serait soumis à des oscillations verticales périodiques du fait de la concordance plus ou moins bonne des excroissances 27 et de la distance verticale entre les points bas des excroissances 27 et la paroi 28 arrondie, par rapport à l'espace entre deux rouleaux 19 successifs. L'amplitude et la phase de ces oscillations verticales varient en fonction de l'orientation angulaire des excroissances 27 par rapport à l'axe de rotation des rouleaux 19. Comme les bouteilles ne sont pas libres mais sont enchâssées dans un pack et que les différents packs de la couche 13 préconformée d'objets sont en appui les uns sur les autres, les efforts qui auraient causé des oscillations verticales à une bouteille seule se traduisent par des contraintes internes au pack 14, voire à des glissements relatifs entre les bouteilles et/ou entre les packs 14, peut être également par des déformations des bouteilles. Toutes ces contraintes et/ou glissements et/ou déformations affectent des matériaux qui ne sont pas totalement élastiques. Ainsi, les efforts périodiques engendrés par le glissement des excroissances 27 sur et entre les rouleaux 19 se traduisent par une dissipation d'énergie principalement dans la couche 13 préconformée d'objets. L'inventeur s'est rendu compte que, pour une dimension donnée des rouleaux 19, et pour des dimensions données du fond 26 de bouteilles, ce type de consommation d'énergie est d'autant plus réduit que la vitesse de transfert de la couche 13 préconformée d'objets est élevée. En effet, à vitesse élevée, les fonds 26 des bouteilles n'ont pas le temps de tomber dans les espaces entre les rouleaux 19.

La somme des énergies consommées, par le tapis 18 de réception ou par la couche 13 préconformée d'objets, au cours d'une avancée Δℓ le long du tapis 18 de réception se traduit par un effort "R" de résistance à l'avancement, égal à la somme des énergies consommées divisée par la distance Δℓ.

L'inventeur s'est rendu compte qu'il est difficile, voire impossible, à un support 16 d'entraînement de convoyeur du type tapis rotatif, de pousser hors de lui la totalité de la couche 13 préconformée d'objets, à moins d'avoir communiqué à cette couche 13 préconformée d'objets une vitesse "V" suffisante.

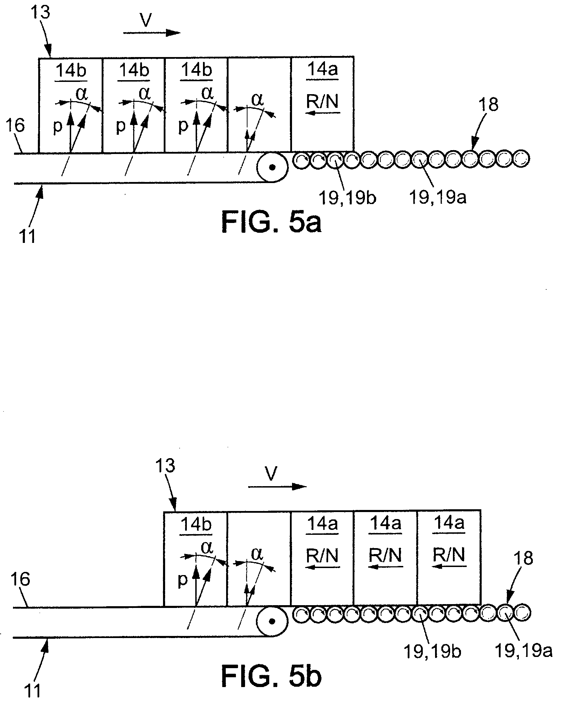

Comme illustré à la figure 5a, chacun des objets 14 de la couche 13 préconformée d'objets présente par rapport au support 16 d'entraînement du convoyeur 11, un coefficient de frottement. Autrement dit, pour un poids "P" donné de l'objet 14, l'effort tangentiel maximum que le support 16 d'entraînement peut exercer sur chaque objet 14 est P.tan(α). Si "N" est le nombre total d'objets 14 de la couche 13 préconformée d'objets, celle-ci présente une configuration intermédiaire illustrée en figure 5b dans laquelle, "n" objets 14a sont déjà passés sur le tapis 18 de réception de l'outil 12 de dépose, tandis que N-n objets 14b sont encore sur le support 16 d'entraînement du convoyeur 11. Du fait de la consommation d'énergie, chaque objet 14a déjà passé subit un effort égal à R/N, où R est la résistance à l'avancement subi par l'ensemble des N objets 14 de la couche 13.

L'inventeur s'est rendu compte que, pour une vitesse faible de transfert, il existe une proportion maximale (n/N < 1) d'objets 14a pouvant être poussés hors du support 16 d'entraînement par les seules forces de frottement. En effet, plus "n" augmente, plus la résistance à l'avancement exercée par le tapis 18 de réception sur la couche 13 préconformée d'objets augmente jusqu'à ce que l'effort tangentiel exercé par le support 16 d'entraînement atteigne sa valeur maximale pour les N-n objets 14b restants. A partir de ce moment là, le support 16 d'entraînement glisse sous les objets 14b qui restent alors immobiles. On appellera cette configuration intermédiaire une configuration de perte d'adhérence.

L'inventeur s'est rendu compte qu'en lançant la couche 13 préconformée d'objets à une vitesse suffisante avant d'atteindre la configuration de perte d'adhérence, il est possible de garantir une arrivée de la totalité de la couche 13 préconformée d'objets sur l'outil 12 de dépose. Autrement dit, l'inventeur s'est rendu compte qu'il est possible de finir l'introduction de la couche 13 préconformée d'objets en totalité sur l'outil 12 de dépose, au seul moyen de l'énergie cinétique communiquée par le support 16 d'entraînement, dans une phase de lancement avant la perte d'adhérence.

Un moyen de détermination de l'énergie cinétique devant être communiquée à la couche pré-conformée d'objets par le convoyeur 11, peut être constitué par une table de données stockées en mémoire et par des moyens de détermination d'une ou plusieurs caractéristiques de la couche arrivée sur le convoyeur 11. Lesdites caractéristiques de la couche peuvent être, le poids, les dimensions, le nombre des objets de la couche et, en particulier, le type de fond des objets ou de la couche devant glisser en contact avec l'outil de dépose. La table comprend, en regard de ces caractéristiques de couche, une donnée indiquant la vitesse d'entrainement minimale devant être communiquée à la couche en question pour que celle-ci atteigne la surface cible de l'outil de dépose uniquement par l'élan communiqué par le convoyeur 11. Le moyen de détermination des caractéristiques de la couche venant d'arriver sur le convoyeur 11 peut comprendre un simple lecteur de code barre. La détermination de la vitesse minimale à communiquer peut résulter d'un calcul mathématique ou être déterminé empiriquement.

Dans une variante, le moyen de détermination de l'énergie cinétique devant être communiquée à la couche pré-conformée d'objets par le convoyeur 11, peut être simplement constitué par la table ci-dessus et par une interface homme-machine pour entrer la vitesse à laquelle la couche doit être lancée. Un opérateur identifie la couche arrivant sur le convoyeur, lie sur la table la vitesse de lancement correspondante et entre la consigne de vitesse de lancement de la couche.

Dans le mode de réalisation illustré aux figures 6a à 6g, le palettiseur comprend un moyen 33 d'arrêt de ladite couche 13 constitué par une butée 30 aval qui est fixe par rapport à l'extrémité de la surface 24 cible la plus éloignée du convoyeur 11. Le tapis 18 de réception de l'outil 12 de dépose comprend un premier rouleau 31 qui est sensiblement adjacent au convoyeur 11 et un rouleau 32 aval qui est disposé à l'extrémité de la surface 24 cible. Cette butée 30 aval est néanmoins réglable de manière à pourvoir s'adapter à des formats différents de couches 13 préconformées d'objets susceptibles d'être traitées par le palettiseur. Une fois la position de la surface 24 cible déterminée pour un format donné, la butée 30 aval est fixée et reste immobile au moins pendant le transfert de la couche 13 préconformée d'objets. Le moyen 34 de maintien de la couche 13 préconformée d'objets sur la surface 24 cible comprend une barre **34a** qui est mobile entre une position escamotée au-dessus du sommet de la couche 13 préconformée d'objets de manière à laisser passer celle-ci, jusqu'à une position de maintien illustrée en pointillés sur la figure 6f.

Le procédé de palettisation comprend une étape de transfert de la couche 13 préconformée d'objets depuis le convoyeur 11 jusqu'à l'outil 12 de dépose illustrée par la succession des figures 6a, 6b, 6c, 6e, 6f et par les graphes de vitesse V correspondants 6d, 6g. Cette étape de transfert comprend une phase de lancement illustrée aux figures 6a à 6c. Il y a d'abord une phase (a-b) d'accélération au cours de laquelle la couche 13 préconformée d'objets est encore entièrement (ou principalement) sur le support 16 d'entraînement, de sorte que l'effort tangentiel maximal de chacun des objets 14 (ou la plupart d'entre eux) peut être sollicité pour accélérer. On obtient ainsi dans la position "b" une vitesse "Vc" de croisière bien avant que la couche 13 préconformée d'objets n'atteigne la position "d" de perte d'adhérence. Plus vite la vitesse "Vc" de croisière est atteinte, plus rapide est le transfert. L'accélération communiquée par le support 16 d'entraînement est toutefois limitée pour éviter de provoquer un glissement de la couche 13 sur le support 16 d'entraînement. Cela peut permettre d'utiliser le convoyeur 11 pour connaître la position de ladite couche 13 et de synchroniser ainsi les actions des différents organes du palettiseur. L'accélération peut aussi être limitée si les objets 14 risquent de basculer.

Le support 16 d'entraînement est mis en mouvement par un moteur M1 qui est dimensionné de manière que, pour une gamme d'utilisations donnée du palettiseur, l'accélération du support 16 d'entraînement soit limité par le type d'utilisations et non pas par la puissance du moteur.

De préférence, la position de début de lancement illustrée en figure 6a est déterminée de manière que la vitesse Vc de croisière ait été atteinte peu avant la position "c" de début d'introduction de la couche 13 préconformée d'objets sur l'outil 12 de dépose. De cette manière, l'énergie consommée par les objets 14b du type de bouteille pétaloïde, est réduite. Cela permet de réduire le temps de transfert.

L'étape de transfert comprend en outre une étape (d-e) de fin d'introduction s'étendant entre la position "d" de perte d'adhérence et la position "e", illustrée en figure 6d, dans laquelle la totalité de la couche 13 préconformée d'objets est arrivée sur l'outil 12 de dépose.

L'étape de transfert comprend en outre une phase d'amenée jusqu'à la position "f" dans laquelle la couche 13 préconformée d'objets est arrivée sur la surface 24 cible. Dans le mode de réalisation illustré aux figures 6a à 6g, la couche 13 préconformée d'objets subit une décélération naturelle tout au long des phases de fin d'introduction et d'amenée. Cette décélération peut éventuellement être linéaire pour des objets 14 à fond plat et pour lesquels la principale consommation d'énergie engendrant la résistance à l'avancement est due à l'entraînement successif des rouleaux 19 en rotation. De manière à être sûr d'arriver à la surface 24 cible, on prévoit que, en fin d'amenée, la vitesse de la couche 13 préconformée d'objets ne soit pas nulle. La butée 30 aval permet alors d'arrêter brutalement la couche 13 préconformée d'objets. Dans ce mode de réalisation, la vitesse Vc de croisière est déterminée pour que la vitesse résiduelle encaissée par la butée 30 aval soit suffisamment faible pour ne pas provoquer de rebond des objets 14.

La barre 34a de maintien est alors abaissée de manière à arriver en position de maintien illustrée en pointillés sur la figure 6f en même temps, ou peu après l'arrivée de la couche 13 préconformée d'objets sur la surface 24 cible. La barre 34a de maintien peut contribuer à éviter le rebond des objets 14 sur la butée 30 aval.

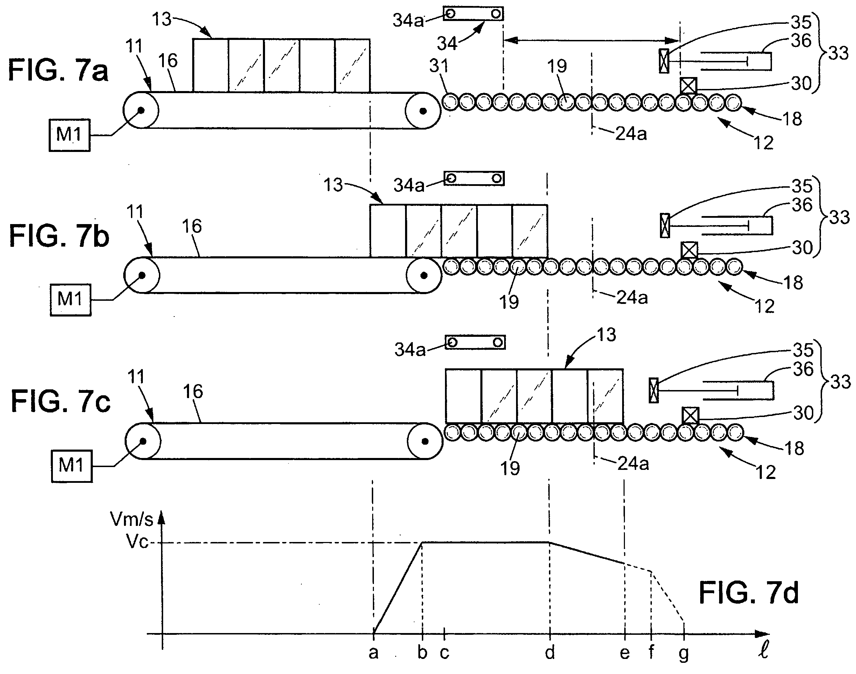

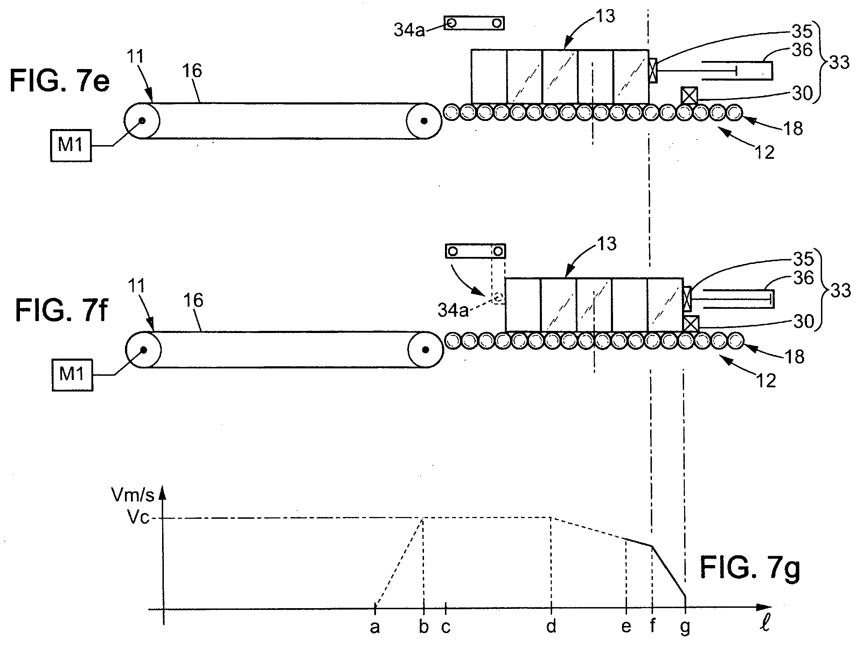

Le palettiseur illustré aux figures 7a à 7g se distingue du palettiseur précédemment décrit uniquement en ce que le moyen 33 d'arrêt comprend, en plus de la butée 30 aval fixe, une butée **35** mobile montée sur un amortisseur **36.** La phase (a-b-c-d) de lancement est similaire à celle précédemment décrite à ceci près que la vitesse Vc de croisière peut être beaucoup plus élevée. La phase (d-e) de fin d'introduction se poursuit à un rythme de décélération naturelle, comme précédemment décrit. La phase (e-f-g) d'amenée comprend, peu après la position "e" d'arrivée en totalité sur l'outil 12 de dépose, une phase (f-g) de décélération rapide, plus rapide que la décélération naturelle. En position "f" de début de décélération rapide, la couche 13 préconformée d'objets est prise en charge par la butée 35 mobile et par l'amortisseur 36. La butée 30 aval fixe permet de garantir la position "g" finale de la couche 13 préconformée d'objets exactement sur la surface 24 cible.

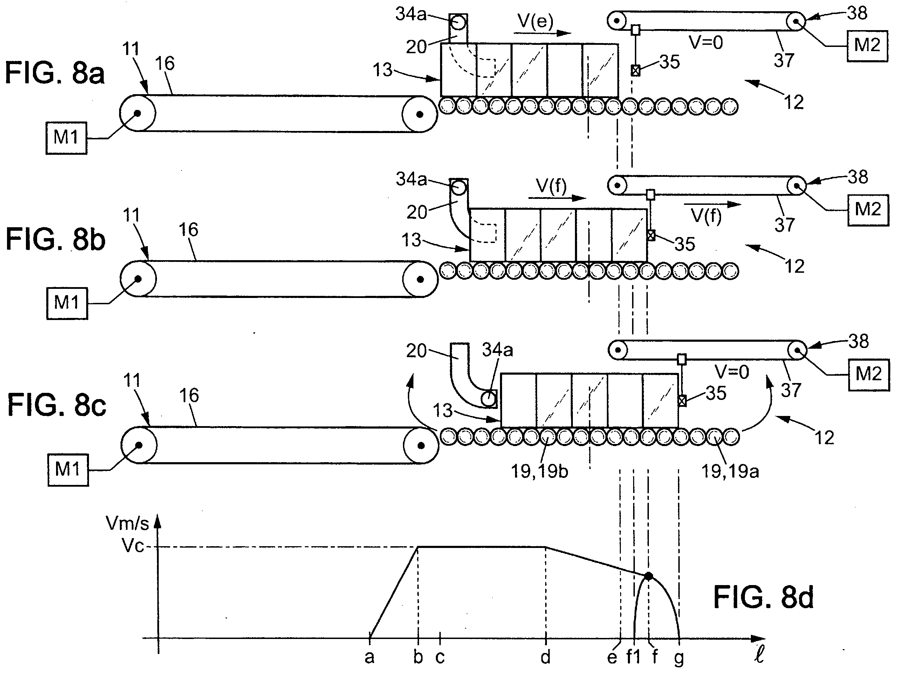

Le palettiseur illustré aux figures 8a à 8d correspond à la figure 2 et diffère du palettiseur illustré aux figures 7a à 7g uniquement par le mode de guidage de la barre 34a de maintien amont et par un mécanisme 38 qui constitue à la fois un amortisseur et un moyen d'arrêt. Il n'y a pas de butée 30 aval mécaniquement fixe. Le mécanisme 38 comprend la butée 35 mobile qui est une barre entraînée par chacune de ses extrémités par une courroie **37** motorisée par un moteur **M2.** La commande du moteur M2 permet de maîtriser à la fois la position, la vitesse et la décélération de la butée 35 mobile. En particulier, il est possible de commander le moteur M2 pour maintenir la butée 35 mobile à la position "g" finale, le moteur M2 garantissant alors un effort de maintien à cette position "g" fixe.

De manière optionnelle, il est possible d'amener la butée 35 mobile en une position "f1" antérieure à la position "f" de début de ralentissement rapide. Pendant que la couche 13 préconformée d'objets parcoure la distance (de), le moteur M2 lance la butée 35 mobile à une vitesse plus lente que la couche 13 préconformée d'objets de manière que la butée 35 mobile et la couche 13 préconformée d'objets se rejoignent en position "f" à une vitesse sensiblement identique. Cela évite le choc en début de freinage rapide entre la couche 13 préconformée d'objets et la butée 35 mobile. Cette variante est particulièrement utile pour des objets 14 qui sont fragiles ou instables. Durant la phase (f-g) de décélération rapide, ladite couche 13 pousse la butée 35 mobile et le moteur M2 travaille en résistance. Avantageusement, le moteur M2 peut être asservi de manière que, quelles que soient les tolérances mécaniques et la vitesse réelle d'arrivée de la couche 13 préconformée d'objets, celle-ci soit amenée à une vitesse sensiblement nulle en position finale "g".

Dans une autre variante, le dispositif de courroie 37 est plus long qu'illustré aux figures 8a à 8d et permet à la butée 35 mobile de prendre en charge le ralentissement de la couche 13 préconformée d'objets depuis la position "d" de fin d'introduction, voire depuis la position "c" de perte d'adhérence. Cette variante permet de mieux maîtriser la position exacte de la couche 13 préconformée d'objets pendant le transfert. Cela permet d'imposer un diagramme de vitesse indépendant de l'aléa pouvant affecter la décélération naturelle de ladite couche 13.

## Revendications

1. Palettiseur pour déposer une couche (13) préconformée d'objets (14) sur une palette (15), comprenant :
- un convoyeur (11), équipé d'une bande de convoyage pour l'entraînement de la couche préconformée d'objets, et conçu pour communiquer une énergie cinétique à ladite couche (13) préconformée d'objets, **caractérisé en ce que** le palettiseur compresse :
- un outil (12) de dépose, conçu pour déposer la couche (13) préconformée d'objets sur la palette (15), étant equipé d'un tapis (18) de réception constitué à une pluralité de rouleaux (19) libres en rotation et étant dépourvu de moyen d'entraînement dans le sens de transfert et
- un moyen de transfert de la couche (13) préconformée d'objets conçu pour que la totalité de ladite couche (13) préconformée d'objets quitte le convoyeur (11) et arrive sur l'outil (12) de dépose;
le moyen de transfert comprenant ledit moyen (16, M1) d'entraînement,
le convoyeur (11) étant est un convoyeur-lanceur qui est conçu pour lancer les couches (13) préconformées d'objets, le moyen de transfert étant constitué uniquement par le moyen d'entraînement du convoyeur-lanceur et par l'énergie cinétique communiquée par le convoyeur-lanceur (11).

2. Palettiseur selon la revendication 1, dans lequel l'outil (12) de dépose est équipé d'un tapis (18) de réception constitué d'une pluralité de rouleaux (19) mobiles en rotation, lequel tapis présente une surface (24) cible sur laquelle une couche (13) préconformée d'objets est prête à être déposée sur la palette (15), et un premier rouleau (31) qui est destiné à être sensiblement adjacent au convoyeur-lanceur (11).

3. Palettiseur selon la revendication 2, comprenant un moyen d'amenée des couches (13) préconformées d'objets jusque sur la surface (24) cible, lequel moyen d'amenée est constitué exclusivement par l'énergie cinétique communiquée par le convoyeur-lanceur (11).

4. Palettiseur selon l'une des revendications 2 ou 3, comprenant un moyen d'arrêt (33, 38) de la couche (13) préconformée d'objets sur la surface cible.

5. Palettiseur selon la revendication 4, dans lequel ledit moyen (33) d'arrêt est constitué par une butée (30), immobile pendant le transfert de la couche préconformée d'objets, ladite butée étant disposée au voisinage de l'extrémité de la surface (24) cible la plus éloignée du convoyeur-lanceur (11).

6. Palettiseur selon l'une des revendications 2 à 5, comprenant un moyen (35-36 ; 35-38) de freinage rapide de la couche préconformée d'objets, lequel moyen comprend une butée (35), montée sur un amortisseur (36, 38) et mobile au moins entre une position de début de freinage rapide et une position au voisinage de l'extrémité de la surface cible la plus éloignée du convoyeur-lanceur (11).

7. Palettiseur selon la revendication 6 dans lequel le moyen (35-38) de freinage comprend une butée (35) mobile sous forme d'une barre entraînée par chacune de ses extrémités par une courroie (37) motorisée par un moteur (M2), la commande du moteur (M2) permettant de maîtriser à la fois le position, la vitesse et la décélération de la butée (35) mobile.

8. Palettiseur selon l'une des revendications 2 à 7, dans lequel les rouleaux (19) de l'outil (12) de dépose ne sont pas raccordés à un moyen d'entraînement positif et/ou ne sont mis en rotation que par la friction des objets en cours de transfert, et/ou dans lequel l'outil (12) de dépose est dépourvu de moyen d'entraînement de la couche (13) préconformée d'objets dans le sens de transfert.

9. Palettiseur selon l'une des revendications 2 à 8, présentant une configuration de transfert dans laquelle le tapis (18) de réception est coplanaire à un plan (17) de convoyage du convoyeur-lanceur (11).

10. Palettiseur selon l'une des revendications précédentes, dans lequel le moyen (16-M1) d'entraînement du convoyeur-lanceur (11) est équipé d'un support (16) d'entraînement, et d'un moteur (M1) de mise en mouvement du support (16) d'entraînement ; le support (16) d'entraînement étant conçu pour communiquer l'énergie cinétique à ladite couche (13) préconformée d'objets par frottement des objets (14b) sur le support (16) d'entraînement sous l'effet du poids des objets (14b).

11. Palettiseur selon l'une des revendications précédentes, comprenant un moyen de détermination de ladite énergie cinétique devant être communiquée.

12. Procédé de palettisation d'une couche (13) préconformée d'objets (14) sur une palette (15), utilisant un palettiseur selon l'une des revendications précédentes, avec un convoyeur (11) et un outil (12) de dépose, le procédé comprenant une étape (a-e ; a-f) de transfert au cours de laquelle la couche (13) préconformée d'objets est entrainée, selon une direction (25) de transfert, depuis le convoyeur (11) jusque sur l'outil (12) de dépose, l'étape de transfert comprenant une phase (d-e) de fin d'introduction au cours de laquelle la totalité de ladite couche (13) préconformée d'objets (14) quitte le convoyeur (11) et arrive sur l'outil (12) de dépose, **caractérisé en ce que** l'étape de transfert comprend une phase (a-d) de lancement de la couche (13) préconformée d'objets au cours de laquelle le convoyeur (11) communique à ladite couche (13) préconformée d'objets une énergie cinétique, l'entraînement dans la direction (25) du transfert de ladite couche (13) préconformée d'objets au cours de la phase (d-e) de fin d'introduction étant uniquement due à l'énergie cinétique acquise durant la phase (a-d) de lancement.

13. Procédé selon la revendication 12, dans lequel l'outil (12) de dépose utilisé présente une surface (24) cible sur laquelle la couche (13) préconformée d'objets est prête à être déposée sur la palette (15), l'énergie cinétique communiquée lors de l'étape (a-d) de lancement étant suffisante pour que la totalité de la couche (13) préconformée d'objets arrive jusqu'à la surface (24) cible.

14. Procédé selon la revendication 12 ou 13, dans lequel l'énergie cinétique communiquée par le convoyeur (11) à ladite couche (13) préconformée d'objets (14) est supérieure ou égale à l'énergie consommée lors du déplacement de la couche (13) préconformée d'objet sur l'outil (12) de dépose, et notamment, lorsque l'outil (12) de dépose utilisé comprend une pluralité de rouleaux (19) mobiles en rotation, elle est supérieure à l'énergie cinétique communiquée aux rouleaux (19).

15. Procédé selon l'une des revendications 12 à 14, comprenant une phase (f-g) de décélération rapide de la couche (13) préconformée d'objets (14) sur l'outil (12) de dépose, au cours de laquelle on décélère la couche (13) préconformée d'objets avec une intensité de décélération plus forte qu'un seuil, dit de décélération naturelle.

## Patentansprüche

1. Palettierer zum Ablegen einer vorgeformten Lage (13) von Gegenständen (14) auf einer Palette (15), der enthält:
- einen Förderer (11), der mit einem Förderband für den Antrieb der vorgeformten Lage von Gegenständen ausgestattet und konzipiert ist, eine kinetische Energie an die vorgeformten Lage (13) von Gegenständen zu übermitteln, **dadurch gekennzeichnet, dass** der Palettierer aufweist:
- ein Ablegewerkzeug (12), das konzipiert ist, die vorgeformte Lage (13) von Gegenständen auf der Palette (15) abzulegen, das mit einem Aufnahmeteppich (18) ausgestattet ist, der aus einer Vielzahl von frei drehbaren Rollen (19) besteht, und keine Antriebseinrichtung in der Transferrichtung aufweist, und
- eine Transfereinrichtung der vorgeformten Lage (13) von Gegenständen, die konzipiert ist, damit die Gesamtheit der vorgeformten Lage (13) von Gegenständen den Förderer (11) verlässt und auf dem Ablegewerkzeug (12) ankommt;
wobei die Transfereinrichtung die Antriebseinrichtung (16, M1) enthält,
wobei der Förderer (11) ein Förderer-Abwerfer ist, der konzipiert ist, die vorgeformten Lagen (13) von Gegenständen abzuwerfen, wobei die Transfereinrichtung nur aus der Antriebseinrichtung des Förderer-Abwerfers und der vom Förderer-Abwerfer (11) übermittelten kinetischen Energie besteht.

2. Palettierer nach Anspruch 1, wobei das Ablegewerkzeug (12) mit einem Aufnahmeteppich (18) ausgestattet ist, der aus einer Vielzahl von drehbeweglichen Rollen (19) besteht, wobei der Teppich eine Zielfläche (24), auf der eine vorgeformte Lage (13) von Gegenständen bereit ist, auf der Palette (15) abgelegt zu werden, und eine erste Rolle (31) aufweist, die dazu bestimmt ist, dem Förderer-Abwerfer (11) im Wesentlichen benachbart zu sein.

3. Palettierer nach Anspruch 2, der eine Zufuhreinrichtung der vorgeformten Lagen (13) von Gegenständen bis zur Zielfläche (24) enthält, wobei die Zufuhreinrichtung ausschließlich aus der vom Förderer-Abwerfer (11) übermittelten kinetischen Energie besteht.

4. Palettierer nach einem der Ansprüche 2 oder 3, der eine Anhalteeinrichtung (33, 38) der vorgeformten Lage (13) von Gegenständen auf der Zielfläche enthält.

5. Palettierer nach Anspruch 4, wobei die Anhalteeinrichtung (33) aus einem Anschlag (30) besteht, der während des Transfers der vorgeformten Lage von Gegenständen unbeweglich ist, wobei der Anschlag in der Nähe des Endes der Zielfläche (24) angeordnet ist, das am weitesten vom Förderer-Abwerfer (11) entfernt ist.

6. Palettierer nach einem der Ansprüche 2 bis 5, der eine Schnellbremseinrichtung (35-36; 35-38) der vorgeformten Lage von Gegenständen enthält, welche Einrichtung einen Anschlag (35) enthält, der auf einen Dämpfer (36, 38) montiert und mindestens zwischen einer Stellung des Schnellbremsbeginns und einer Stellung in der Nähe des am weitesten vom Förderer-Abwerfer (11) entfernten Endes der Zielfläche beweglich ist.

7. Palettierer nach Anspruch 6, wobei die Bremseinrichtung (35-38) einen beweglichen Anschlag (35) in Form einer Stange enthält, die über jedes ihrer Enden von einem von einem Motor (M2) motorisierten Antriebsriemen (37) angetrieben wird, wobei die Steuerung des Motors (M2) es ermöglicht, gleichzeitig die Stellung, die Geschwindigkeit und die Verlangsamung des beweglichen Anschlags (35) zu beherrschen.

8. Palettierer nach einem der Ansprüche 2 bis 7, wobei die Rollen (19) des Ablegewerkzeugs (12) nicht an eine Positivantriebseinrichtung angeschlossen sind und/oder nur durch die Reibung der transferiert werdenden Gegenstände in Drehung versetzt werden, und/oder wobei das Ablegewerkzeug (12) keine Antriebseinrichtung der vorgeformten Lage (13) von Gegenständen in der Transferrichtung aufweist.

9. Palettierer nach einem der Ansprüche 2 bis 8, der eine Transferkonfiguration aufweist, in der der Aufnahmeteppich (18) zu einer Beförderungsebene (17) des Förderer-Abwerfers (11) koplanar ist.

10. Palettierer nach einem der vorhergehenden Ansprüche, wobei die Antriebseinrichtung (16-M1) des Förderer-Abwerfers (11) mit einem Antriebsträger (16) und mit einem Motor (M1) zum Inbewegungsetzen des Antriebsträgers (16) ausgestattet ist; wobei der Antriebsträger (16) konzipiert ist, die kinetische Energie an die vorgeformte Lage (13) von Gegenständen durch Reibung der Gegenstände (14b) auf dem Antriebsträger (16) unter der Wirkung des Gewichts der Gegenstände (14b) zu übermitteln.

11. Palettierer nach einem der vorhergehenden Ansprüche, der eine Bestimmungseinrichtung der kinetischen Energie enthält, die übermittelt werden soll.

12. Verfahren zur Palettisierung einer vorgeformten Lage (13) von Gegenständen (14) auf einer Palette (15), das einen Palettierer nach einem der vorhergehenden Ansprüche mit einem Förderer (11) und einem Ablegewerkzeug (12) verwendet, wobei das Verfahren einen Transferschritt (a-e; a-f) enthält, während dessen die vorgeformte Lage (13) von Gegenständen gemäß einer Transferrichtung (25) vom Förderer (11) bis auf das Ablegewerkzeug (12) angetrieben wird, wobei der Transferschritt eine Einführ-Endphase (d-e) enthält, während der die Gesamtheit der vorgeformten Lage (13) von Gegenständen (14) den Förderer (11) verlässt und auf dem Ablegewerkzeug (12) ankommt, **dadurch gekennzeichnet, dass** der Transferschritt eine Phase (a-d) des Abwerfens der vorgeformten Lage (13) von Gegenständen enthält, während der der Förderer (11) an die vorgeformte Lage (13) von Gegenständen eine kinetische Energie übermittelt, wobei der Antrieb in die Richtung (25) des Transfers der vorgeformten Lage (13) von Gegenständen während der Einführ-Endphase (d-e) nur durch die während der Abwerfphase (a-d) erworbene kinetische Energie verursacht wird.

13. Verfahren nach Anspruch 12, wobei das verwendete Ablegewerkzeug (12) eine Zielfläche (24) aufweist, auf der die vorgeformte Lage (13) von Gegenständen zur Ablage auf der Palette (15) bereit ist, wobei die im Abwerfschritt (a-d) übermittelte kinetische Energie ausreicht, damit die Gesamtheit der vorgeformten Lage (13) von Gegenständen bis zur Zielfläche (24) gelangt.

14. Verfahren nach Anspruch 12 oder 13, wobei die vom Förderer (11) an die vorgeformte Lage (13) von Gegenständen (14) übermittelte kinetische Energie höher als die oder gleich der Energie ist, die bei der Verschiebung der vorgeformten Lage (13) von Gegenständen auf dem Ablegewerkzeug (12) verbraucht wird, und insbesondere, wenn das verwendete Ablegewerkzeug (12) eine Vielzahl von drehbeweglichen Rollen (19) enthält, ist sie höher als die an die Rollen (19) übermittelte kinetische Energie.

15. Verfahren nach einem der Ansprüche 12 bis 14, das eine Phase (f-g) der schnellen Verlangsamung der vorgeformten Lage (13) von Gegenständen (14) auf dem Ablegewerkzeug (12) enthält, während der die vorgeformte Lage (13) von Gegenständen mit einer Verlangsamungsintensität verlangsamt wird, die stärker als eine so genannte natürliche Verlangsamungsschwelle ist.

## Claims

1. Palletizer for depositing a preformed layer (13) of objects (14) on a pallet (15), comprising:
- a conveyor (11), equipped with a conveying belt for advancing the preformed layer of objects, and designed to impart kinetic energy to said preformed layer (13) of objects,
**characterized in that** the palletizer comprises
- a layer depositing tool (12), designed to deposit the preformed layer (13) of objects onto the pallet (15), being equipped with a receiving bed (18) consisting of a plurality of freely rotatable rollers (19) and being without advancement means in the transfer direction and
- a transfer means for transferring the preformed layer (13) of objects, designed so that the entirety of said preformed layer (13) of objects leaves the conveyor (11) and arrives on the layer depositing tool (12);
the transfer means comprising said advancement means (16, M1),
the conveyor being a conveyor-launcher (11) designed to launch the preformed layers (13) of objects, the transfer means consisting solely of the advancement means of the conveyor-launcher (11) and the kinetic energy imparted by the conveyor-launcher (11).

2. Palletizer according to claim 1, wherein the layer depositing tool (12) is equipped with a receiving bed (18) consisting of a plurality of rotatable rollers (19), said bed providing a target surface (24) on which a preformed layer (13) of objects is ready to be deposited on the pallet (15), and a first roller (31) which is intended to be substantially adjacent to the conveyor (11).

3. Palletizer according to claim 2, comprising a transfer completion means for bringing preformed layers (13) of objects onto the target surface (24), said transfer completion means consisting solely of the kinetic energy imparted by the conveyor-launcher (11).

4. Palletizer according to claim 2 or 3, comprising a stop means (33, 38) for stopping the preformed layer (13) of objects on the target surface.

5. Palletizer according to claim 4, wherein said stop means (33) consists of a stop (30) which remains immobile during the transfer of the preformed layer of objects, said stop being placed near the end of the target surface (24) furthest from the conveyor-launcher (11).

6. Palletizer according to any of claims 2 to 5, comprising a braking means (35-36 ; 35-38) for rapidly braking the preformed layer of objects, said braking means comprising a stop (35), assembled onto a shock absorber (36, 38) and capable to move at least between a rapid braking start position and a position at, or near, the end of the target surface furthest from the conveyor-launcher (11).

7. Palletizer according to claim 6, wherein the braking means (35-38) comprises a mobile stop (35) which is a bar driven at each end by a belt (37) powered by a motor (M2), controlling the motor (M2) giving control of the position, velocity, and deceleration of the movable stop (35).

8. Palletizer according to any of claims 2 to 7, wherein the rollers (19) of the layer depositing tool (12) are not connected to a drive means and/or are only rotated by the friction of objects being transferred and/or wherein the layer depositing tool (12) is without a means for advancing the preformed layer (13) of objects in the transfer direction.

9. Palletizer according to any of claims 2 to 8, presenting a transfer configuration in which the receiving bed (18) is coplanar to a plane of conveyance (17) of the conveyor-launcher (11).

10. Palletizer according to any of the preceding claims, wherein the advancement means (16-M1) of the conveyor-launcher (11) is equipped with an advancement support (16) and a motor (M1) for supplying motion to the advancement support (16), said advancement support (16) being designed to impart kinetic energy to said preformed layer (13) of objects by the friction of the objects (14b) on the advancement support (16) due to the effect of the weight of the objects (14b).

11. Palletizer according to any of preceding claims, comprising a means of determining said kinetic energy to be imparted.

12. Method for palletizing a preformed layer (13) of objects (14) on a pallet (15), using a palletizer according to any of the preceding claims, with a conveyor (11) and a layer depositing tool (12), said method comprising a transfer step (a-e; a-f) during which the preformed layer (13) of objects is advanced in a transfer direction (25), from the conveyor (11) to the layer depositing tool (12), said transfer step comprising a transfer completion phase (d-e) during which the entirety of said preformed layer (13) of objects (14) leaves the conveyor (11) and arrives on the layer depositing tool (12), **characterized in that** the transfer step comprises a launch phase (a-d) for the preformed layer (13) of objects during which the conveyor (11) imparts kinetic energy to said preformed layer (13) of objects, the advancement of said preformed layer (13) of objects in the transfer direction (25) during the transfer completion phase (d-e) being solely due to the kinetic energy acquired during the launch phase (a-d).

13. Method according to claim 12, wherein the layer depositing tool (12) used provides a target surface (24) on which the preformed layer (13) of objects is ready to be deposited on the pallet (15), the kinetic energy imparted during the launch step (a-d) being sufficient for the entirety of the preformed layer (13) of objects to arrive on the target surface (24).

14. Method according to either claim 12 or 13, wherein the kinetic energy imparted by the conveyor (11) to said preformed layer (13) of objects (14) is greater than or equal to the energy consumed during the movement of the preformed layer (13) of objects onto the layer depositing tool (12), and particularly, when the layer depositing tool (12) used comprises a plurality of rotatable rollers (19), the kinetic energy imparted by the conveyor (11) to said preformed layer (13) of objects (14) is greater than the kinetic energy imparted by the objects to the rollers (19).

15. Method according to any of claims 12 to 14, comprising a phase (f-g) of rapid deceleration of the preformed layer (13) of objects (14) on the layer depositing tool (12), during which the preformed layer (13) of objects is decelerated at a deceleration intensity that is higher than a threshold referred to as the natural deceleration.
